# FASCICULE DE BREVET EUROPEEN

(11) **EP 2 832 983 B1**
(45) Date de publication et mention de la délivrance du brevet: **17.08.2016**
(21) Numéro de dépôt: 14173622.3
(22) Date de dépôt: 24.06.2014
(51) Int. Cl.: F02M 26/43, F02M 26/41

(54) **Moteur à combustion interne à démarrabilité ameliorée**
Verbrennungsmotor mit verbessertem Startvermögen
Internal combustion engine with improved starting

(30) Priorité: 30.07.2013 FR 1357530
(43) Date de publication de la demande: 04.02.2015
(73) Titulaire: PEUGEOT CITROËN AUTOMOBILES SA, 78140 Vélizy-Villacoublay (FR)
(72) Inventeur: Tarallo, Romain, 77700 BAILLY ROMAINVILLIERS (FR); Jan, Marc, 92350 LE PLESSIS ROBINSON (FR); Novati, Jean, 78420 CARRIERES SUR SEINE (FR)

(56) Documents cités:
- JP-A- 2002 089 377
- US-A- 4 413 605
- US-A1- 2012 204 845

## Description

L'invention porte sur un moteur à combustion interne du type de moteur à combustion interne comportant une pluralité de cylindres dont au moins un cylindre de recirculation, le cylindre de recirculation étant pourvu d'un canal de recirculation de gaz de recirculation vers un collecteur d'admission d'air équipant le moteur à combustion interne, le moteur à combustion interne étant équipé d'une ligne d'échappement pour évacuer des gaz d'échappement produits par les cylindres. L'invention porte également sur un procédé de mise en oeuvre d'un tel moteur à combustion interne.

Un véhicule automobile est couramment équipé d'un moteur à combustion interne pour permettre son déplacement. Le moteur à combustion interne est par exemple un moteur à quatre-temps suralimenté. Le moteur à combustion interne comporte plusieurs cylindres ménagés à l'intérieur d'un bloc-cylindres. Les cylindres produisent des gaz d'échappement suite à la combustion d'un mélange air-carburant introduit à l'intérieur des cylindres. Parmi ces cylindres, on distingue, pour certains types de moteur à combustion interne, un cylindre de recirculation qui produit des gaz d'échappement, nommés gaz de recirculation, en raison du fait que les gaz de recirculation sont introduits à l'intérieur d'un collecteur d'admission d'air, dont est pourvu le moteur à combustion. Le collecteur d'admission d'air est prévu pour délivrer de l'air aux cylindres. Autrement dit, les gaz de recirculation ne sont pas véhiculés vers une ligne d'échappement à l'instar des gaz d'échappement produits par les autres cylindres du moteur à combustion interne mais sont retournés vers les cylindres. Un tel moteur à combustion interne est bien connu sous le sigle moteur D-EGR selon l'acronyme anglo-saxon pour Dedicated Exhaust Gas Recirculation pour système dédié de réintroduction ou recirculation de gaz d'échappement. Un exemple d'un tel système est décrit dans le US-2012/0204845.

Un tel moteur à combustion interne présente dés inconvénients notamment lors d'une phase de démarrage à froid du moteur à combustion interne.

Plus particulièrement, lorsque le moteur à combustion interne est froid et/ou lorsqu'une température ambiante est inférieure à -10°C, le moteur à combustion interne doit tout de même être à même de vaincre des pressions moyennes de frottement au démarrage. De telles pressions moyennes de frottements sont notamment liées à la viscosité d'une huile de lubrification du moteur à combustion interne à basse température.
Il s'avère que, dans certains cas de figure, le moteur à combustion n'est pas capable de surpasser de telles pressions moyennes de frottement et consécutivement le moteur à combustion interne ne démarre pas, ce qui constitue un inconvénient.

Plus particulièrement encore, les gaz de recirculation tendent à augmenter un délai d'initiation du moteur à combustion interne et tendent à diminuer une vitesse d'un front de flamme à l'intérieur des cylindres. Or, l'agencement d'un tel moteur à combustion interne ne permet pas de diminuer une quantité de gaz de recirculation à l'admission, ce qui peut, dans certaines situations, rendre impossible le démarrage du moteur à combustion interne.

Le document de brevet US 4 131 095 décrit un moteur à combustion interne du genre susvisé dans lequel le cylindre de recirculation est pourvu de deux soupapes d'évacuation, dont une première soupape qui équipe un canal d'évacuation des gaz de recirculation vers la ligne d'échappement et une deuxième soupape qui équipe un canal de recirculation des gaz d'échappement vers un collecteur d'admission équipant les autres cylindres du moteur à combustion interne.

Le moteur à combustion interne est équipé d'un dispositif de contrôle des soupapes. Le dispositif de contrôle comprend un axe équipé d'un arbre à cames pourvu d'une première came en relation avec la première soupape et d'une deuxième came en relation avec la deuxième soupape. Une extrémité de l'axe est agencée en un piston qui est apte à coulisser à l'intérieur d'une chambre cylindrique. Le piston délimite partiellement une première chambre cylindrique et une deuxième chambre cylindrique réparties dé part et d'autre du piston. La première chambre cylindrique et la deuxième chambre cylindrique communiquent avec un réservoir de fluide par l'intermédiaire d'une vanne électromagnétique et d'une pompe à fluide. Selon la position de la vanne électromagnétique, la pompe à fluide alimente en fluide soit la première chambre cylindrique, soit la deuxième chambre cylindrique. Il en résulte un mouvement en translation de l'axe et de l'arbre à cames qui lui est affecté. Un tel mouvement en translation provoque une mise à l'ouverture de l'une des soupapes et une mise à la fermeture de l'autre des soupapes.

Un tel moteur à combustion interne n'offre pas de solution satisfaisante pour assurer un démarrage à froid du moteur à combustion interne, ce qui constitue un inconvénient majeur, notamment pour des pays d'utilisation du véhicule automobile à climat froid.

De plus, le dispositif de contrôle des soupapes s'avère complexe et est difficile à implanter sur le véhicule automobile. Par ailleurs, le dispositif de contrôle est source de dysfonctionnements, notamment en raison de problèmes d'étanchéité et de tenue thermique dudit dispositif, ce qu'il est préférable d'éviter. Par ailleurs encore, un tel dispositif de contrôle s'avère lourd et encombrant, ce qui mérite d'être amélioré. Enfin, un tel dispositif de contrôle génère un volume mort de gaz de recirculation ce qu'il est conseillé d'éviter.

Un but de la présente invention est de proposer un moteur à combustion interne qui répond aux inconvénients susvisés et qui est notamment apte à démarrer quelque soient les conditions climatiques que le moteur à combustion interne subit, notamment une température extérieure froide, par exemple inférieure à -10°C, et/ou lorsque le moteur est froid.

Un moteur de la présente invention est un moteur à combustion interne comportant une pluralité de cylindres dont au moins un cylindre de recirculation. Le cylindre de recirculation est pourvu d'un canal de recirculation de gaz de recirculation vers un collecteur d'admission d'air équipant le moteur à combustion interne. Le moteur à combustion interne est équipé d'une ligne d'échappement pour évacuer des gaz d'échappement produits par les cylindres.

Selon la présente invention, le moteur à combustion interne est pourvu d'un canal de déviation qui relie le cylindre de recirculation à la ligne d'échappement.

Le canal de déviation est préférentiellement ménagé à l'intérieur d'une culasse que comprend le moteur à combustion interne.

Le canal de déviation est avantageusement équipé d'une soupape de déviation qui est mobile entre une position d'ouverture dans laquelle la soupape de déviation autorise un passage de gaz de recirculation à l'intérieur du canal de déviation et une position de fermeture dans laquelle la soupape de déviation interdit un tel passage.

La soupape de déviation est avantageusement en relation avec une came de déviation qui est montée sur un arbre à cames d'échappement équipé de cames de manoeuvre de soupapes d'échappement affectées au cylindre de recirculation.

De préférence, la came de déviation est pourvu d'un organe de verrouillage de la came de déviation, l'organe de verrouillage étant mobile entre une position de verrouillage dans laquelle l'organe de verrouillage maintient fixe la came de déviation par rapport à l'arbre à cames d'échappement et une position de déverrouillage dans laquelle l'organe de verrouillage rend libre la came de déviation.

Une position de l'organe de verrouillage est avantageusement placée sous la dépendance d'une pression d'huile de lubrification du moteur à combustion interne.

Le canal de recirculation est préférentiellement pourvu d'une vanne de recirculation qui est agencée entre une position fermée dans laquelle la vanne de recirculation interdit un passage de gaz de recirculation à l'intérieur du canal de recirculation et une position ouverte dans laquelle la vanne de recirculation autorise un tel passage.

Un procédé de la présente invention est un procédé de mise en oeuvre d'un tel moteur à combustion interne qui est notamment reconnaissable en ce que indifféremment lors d'une phase d'arrêt du moteur à combustion interne et lors d'une phase de démarrage du moteur à combustion interne à une température inférieure à une température-seuil, l'organe de verrouillage est en position de verrouillage et la vanne de recirculation est en position fermée.

De préférence, après une phase de démarrage du moteur à combustion interne, l'organe de verrouillage est en position de déverrouillage et la vanne de recirculation (10) est en position ouverte.

Un véhicule automobile de la présente invention est principalement reconnaissable en ce que le véhicule automobile est équipé d'un tel moteur à combustion interne.

D'autres caractéristiques et avantages de la présente invention apparaîtront à la lecture de la description qui va en être faite d'exemples de réalisation, en relation avec les figures des planches annexées, dans lesquelles :

La figure 1 est une vue schématique partielle d'un moteur à combustion interne de la présente invention.

La figure 2 est une vue schématique en coupe d'un arbre à came d'échappement que comprend le moteur à combustion interne illustré sur la figure précédente.

La figure 3 est une vue schématique de face de l'arbre à came représenté sur la figure 2.

La figure 4 est une illustration d'une loi de levée respective de cames équipant l'arbre à came d'échappement illustré sur les figures 2 et 3.

Les figures 5 et 6 sont des vues schématiques de l'arbre à cames illustré sur les figures 2 et 3 selon diverses positions d'un organe de verrouillage équipant ledit arbre à came, soit respectivement en position de verrouillage sur la figure 5 et en position de déverrouillage sur la figure 6.

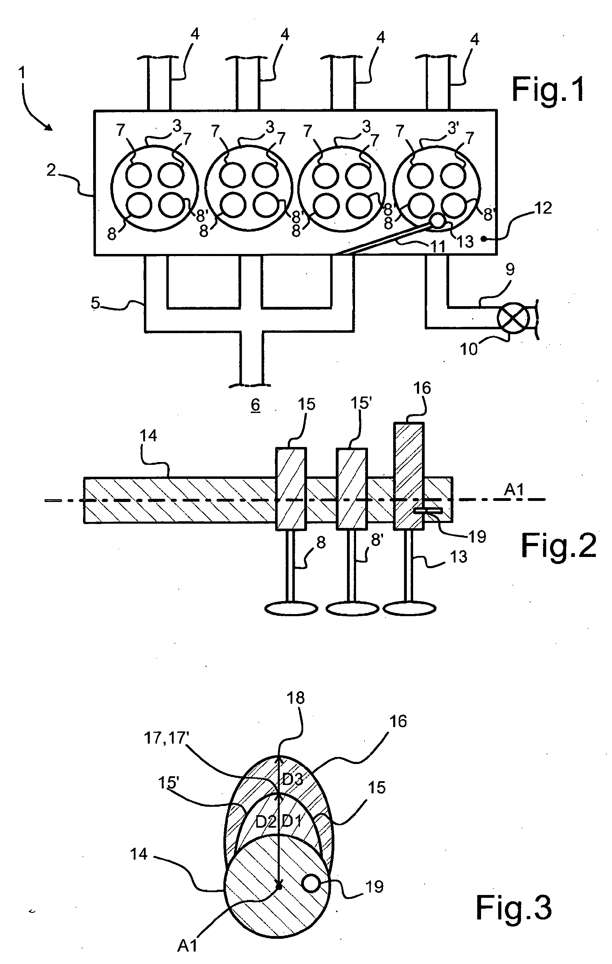

Sur la figure 1, un moteur à combustion interne 1 équipe un véhicule automobile pour pourvoir au déplacement de ce dernier. Le moteur à combustion interne 1 est par exemple un moteur essence à quatre temps. Le moteur à combustion interne 1 comprend un bloc-cylindres 2 qui loge des cylindres 3,3' à l'intérieur desquels une combustion d'un mélange air-carburant est effectuée, une telle combustion produisant des gaz d'échappement. Le moteur à combustion interne 1 est équipé d'un collecteur d'admission d'air 4 qui est destiné à délivrer de l'air aux cylindres 3,3'. Le moteur à combustion interne 1 est également pourvu d'une ligne d'échappement 5 qui est destinée à évacuer les gaz d'échappement vers un environnement extérieur 6 au véhicule automobile. Chaque cylindre 3,3' est pourvu de deux soupapes d'admission 7 qui contrôle une admission d'air à l'intérieur du cylindre correspondant 3,3'. Chaque cylindre 3,3' est également pourvu de deux soupapes d'échappement 8,8' qui contrôle une évacuation des gaz d'échappement hors du cylindre correspondant 3,3'.

Parmi les cylindres 3,3', on distingue au moins un cylindre de recirculation 3' qui produit des gaz d'échappement nommés gaz de recirculation en raison du fait que ces derniers sont véhiculés par l'intermédiaire d'un conduit de recirculation 9 vers le collecteur d'admission d'air 4 et/ou vers au moins l'un des cylindres 3,3'. Le conduit de recirculation 9 est équipé d'une vanne de recirculation 10 qui est, en position fermée, apte à interdire autoriser une circulation des gaz de recirculation à l'intérieur du conduit de recirculation 9 et qui est, en position ouverte, apte à autoriser une circulation des gaz de recirculation à l'intérieur du conduit de recirculation 9.

Dans sa généralité, la présente invention propose d'équiper le cylindre de recirculation 3' d'un canal de déviation 11 des gaz de recirculation vers la ligne d'échappement 5. Autrement dit, le canal de déviation 11 relie aérauliquement le cylindre de recirculation 3' à la ligne d'échappement 5. Le canal de déviation 11 est préférentiellement ménagé à l'intérieur d'une culasse 12 qui équipe le moteur à combustion interne 1.

Le canal de déviation 11 est pourvu d'une soupape de déviation 13. La soupape de déviation 13 est mobile entre une position d'ouverture dans laquelle la soupape de déviation 13 est placée lors d'une phase de démarrage du moteur à combustion interne 1, et une position de fermeture dans laquelle la soupape de déviation 13 est placée une fois le moteur à combustion interne 1 démarré. En position de fermeture, la soupape de déviation 13 interdit une évacuation des gaz de recirculation vers la ligne d'échappement 5 tandis qu'en position d'ouverture la soupape de déviation 13 autorise une telle évacuation.

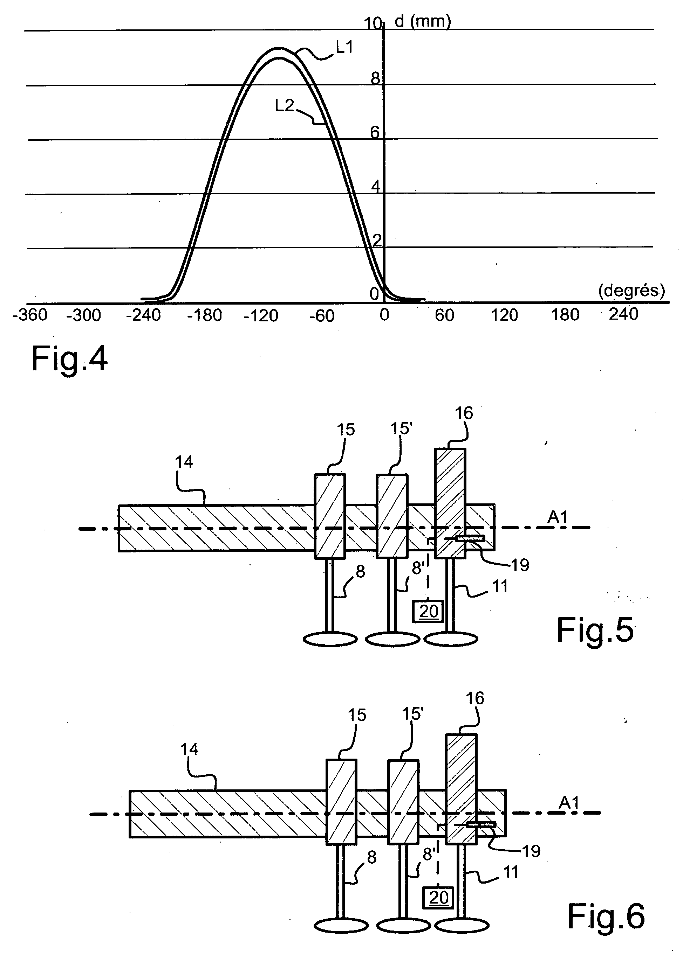

Sur les figures 2 et 3, la soupape de déviation 13 et les soupapes d'échappement 8,8' du cylindre de recirculation 3' sont manoeuvrées par l'intermédiaire d'un arbre à cames d'échappement 14. A cet effet, l'arbre à cames d'échappement 14 est pourvu d'une première came 15 en relation avec la première soupape 8, d'une deuxième came 15' en relation avec la deuxième soupape 8' et d'une came de déviation 16 en relation avec la soupape de déviation 13. La première came 15, la deuxième came 15' et la came de déviation 16 sont mobiles en rotation autour d'un axe de came A₁. Chaque came 15,15',16 comporte un point périphérique de levée respectif 17,17',18 qui est le point le plus éloigné d'une périphérie de la came correspondante 15,15',16 avec l'axe de came A₁. Autrement dit, la première came 15 comprend un premier point périphérique de levée 17 qui est situé à une première distance maximale D₁, la deuxième came 15' comprend un deuxième point périphérique de levée 17' qui est situé à une deuxième distance maximale D₂ et la came de déviation 16 comprend un troisième point périphérique de levée 18 qui est située à une troisième distance maximale D₃. De préférence, la troisième distance maximale D₃ est supérieure à la première distance maximale D₁. De préférence encore, la troisième distance maximale D₃ est supérieure à la deuxième distance maximale D₂. Ces dispositions sont telles qu'une première loi de levée L1 de la came de déviation 16 englobe une deuxième loi de levée L2 de la première came 15 et de la deuxième came 15', tel qu'illustré sur la figure 4, la figure 4 représentant une levée d'échappement de chaque came 15,15',16 en fonction d'un degré de rotation de l'arbre à came d'échappement 14.

La came de déviation 16 est pourvue d'un organe de verrouillage 19 qui est mobile entre une position de verrouillage dans laquelle l'organe de verrouillage 19 maintient solidaire et fixe la came de déviation 16 par rapport à l'arbre à cames d'échappement 14 et une position de déverrouillage dans laquelle l'organe de verrouillage 19 rend libre et folle la came de déviation 16. En position de verrouillage, la came de déviation 16 est active tandis qu'en position de déverrouillage la came de déviation 16 est inactive. L'organe de verrouillage 19 est par exemple agencé en un pion de verrouillage. L'organe de verrouillage 19 est par exemple pourvu d'un organe de rappel 20, du type ressort ou analogue, qui est apte à maintenir en position de verrouillage l'organe de verrouillage 19.

Sur les figures 5 et 6, la position de l'organe de verrouillage 19 est placée sous la dépendance d'une pression d'huile de lubrification présente à l'intérieur d'un circuit de lubrification 20 du moteur à combustion interne 1. Plus particulièrement, lorsque le moteur est froid ou en ambiance froide, la pression d'huile de lubrification est faible de telle sorte que l'organe de verrouillage 19 est en position de verrouillage, tel qu'illustré sur la figure 5. Plus particulièrement encore, lorsque la température du moteur à combustion interne 1 est au-dessus d'une température-seuil, la pression d'huile de lubrification est forte de telle sorte que l'organe de verrouillage 19 est en position de déverrouillage, tel qu'illustré sur la figure 6. Selon une autre variante de réalisation, la position de l'organe de verrouillage 19 est pilotée par une électrovanne ou analogue.

Un procédé de mise en oeuvre d'un tel moteur à combustion interne 1 comprend au moins trois phases de vie distinctes suivant un état du moteur à combustion interne 1.

Lorsque le moteur à combustion interne 1 est éteint, l'huile de lubrification est à faible température de telle sorte que l'organe de verrouillage 19 est en position de verrouillage. Il en résulte que la came de déviation 16 est potentiellement active mais demeure immobile en raison de l'arrêt du moteur à combustion interne 1. La vanne de recirculation 10 est en position de fermeture de telle sorte qu'aucune circulation de gaz à l'intérieur du canal de recirculation 9 n'est permise.

Lorsque le moteur à combustion interne 1 est en phase de démarrage à froid, l'huile de lubrification est encore à faible température de telle sorte que l'organe de verrouillage 19 est en position de verrouillage. Il en résulte que la came de déviation 16 est active et est apte à manoeuvrer la soupape de déviation 13 en translation entre la position d'ouverture et la position de fermeture. La vanne de recirculation 10 est maintenue en position de fermeture de telle sorte qu'aucune circulation de gaz à l'intérieur du canal de recirculation 9 n'est possible. Il découle de l'ensemble de ces dispositions que les gaz de recirculation empruntent le canal de déviation 11 lorsqu'une position de la soupape de déviation 13 le permet pour être finalement admis à l'intérieur de la ligne d'échappement 5. Il en découle que le moteur à combustion interne 1 démarre y compris lors de température extérieure froide, notamment inférieure à -10°C, et/ou lorsque le moteur à combustion interne est froid.

Lorsque le moteur à combustion interne 1 est démarré et que sa température est supérieure à la température-seuil, la température de l'huile de lubrification a augmenté de telle sorte que l'organe de verrouillage 19 est en position de déverrouillage. Il en résulte que la came de déviation 16 est inactive et que la soupape de déviation 13 demeure en position de fermeture. La vanne de recirculation 10 est quant à elle placée en position d'ouverture de telle sorte que les gaz de recirculation s'écoulent à l'intérieur du canal de recirculation 9 depuis le cylindre de recirculation 3' jusqu'à l'admission d'air du moteur à combustion interne 1.

L'ensemble de ces dispositions est tel que le moteur à combustion interne 1 démarre quel que soient les conditions de température ambiante et/ou du moteur à combustion interne 1 lui-même, y compris lorsque de telles températures sont froides, par exemple inférieures à -10°C. Il en résulte qu'une pression moyenne indiquée de la boucle haute pression de l'huile de lubrification est apte à surpasser une pression moyenne de frottements du moteur à combustion interne 1 à froid et/ou à température ambiante froide, à partir d'un moteur à combustion interne 1 qui est simple, fiable et robuste, et dont les modifications par rapport à un moteur à combustion interne de l'art antérieur n'affectent que la culasse 12.

## Revendications

1. Moteur à combustion interne (1) comportant une pluralité de cylindres (3,3') dont au moins un cylindre de recirculation (3'), le cylindre de recirculation (3') étant pourvu d'un canal de recirculation (9) de gaz de recirculation vers un collecteur d'admission d'air (4) équipant le moteur à combustion interne (1), le moteur à combustion interne (1) étant équipé d'une ligne d'échappement (5) pour évacuer des gaz d'échappement produits par les cylindres (3,3'), le moteur à combustion interne (1) étant pourvu d'un canal de déviation (11) qui relie le cylindre de recirculation (3') à la ligne d'échappement (5), **caractérisé en ce que** le canal de déviation (11) est ménagé à l'intérieur d'une culasse (12) que comprend le moteur à combustion interne (1).

2. Moteur à combustion interne (1) selon la revendication 1, **caractérisé en ce que** le canal de déviation (11) est équipé d'une soupape de déviation (13) qui est mobile entre une position d'ouverture dans laquelle la soupape de déviation (13) autorise un passage de gaz de recirculation à l'intérieur du canal de déviation (11) et une position de fermeture dans laquelle la soupape de déviation (13) interdit un tel passage.

3. Moteur à combustion interne (1) selon la revendication 2, **caractérisé en ce que** la soupape de déviation (13) est en relation avec une came de déviation (16) qui est montée sur un arbre à cames d'échappement (14) équipé de cames (15,15') de manoeuvre de soupapes d'échappement (8,8') affectées au cylindre de recirculation (3').

4. Moteur à combustion interne (1) selon la revendication 3, **caractérisé en ce que** la came de déviation (16) est pourvu d'un organe de verrouillage (19) de la came de déviation (16), l'organe de verrouillage (19) étant mobile entre une position de verrouillage dans laquelle l'organe de verrouillage (19) maintient fixe la came de déviation (16) par rapport à l'arbre à cames d'échappement (14) et une position de déverrouillage dans laquelle l'organe de verrouillage (19) rend libre la came de déviation (16).

5. Moteur à combustion interne (1) selon la revendication 4, **caractérisé en ce qu'**une position de l'organe de verrouillage (19) est placée sous la dépendance d'une pression d'huile de lubrification du moteur à combustion interne (1).

6. Moteur à combustion interne (1) selon l'une quelconque des revendications précédentes, **caractérisé en ce que** le canal de recirculation (9) est pourvu d'une vanne de recirculation (10) qui est agencée entre une position fermée dans laquelle la vanne de recirculation (10) interdit un passage de gaz de recirculation à l'intérieur du canal de recirculation (9) et une position ouverte dans laquelle la vanne de recirculation (10) autorise un tel passage.

7. Procédé de mise en oeuvre d'un moteur à combustion interne (1) selon les revendications 3 et 6, **caractérisé en ce que** indifféremment lors d'une phase d'arrêt du moteur à combustion interne (1) et lors d'une phase de démarrage du moteur à combustion interne (1) à une température inférieure à une température-seuil, l'organe de verrouillage (19) est en position de verrouillage et la vanne de recirculation (10) est en position fermée.

8. Procédé selon la revendication 7, **caractérisé en ce qu'**après une phase de démarrage du moteur à combustion interne (1), l'organe de verrouillage (19) est en position de déverrouillage et la vanne de recirculation (10) est en position ouverte.

9. Véhicule automobile équipé d'un moteur à combustion interne (1) selon l'une quelconque des revendications 1 à 6.

## Patentansprüche

1. Verbrennungsmotor (1), der eine Mehrzahl von Zylindern (3, 3') umfasst, darunter mindestens einen Rezirkulationszylinder (3'), wobei der Rezirkulationszylinder (3') mit einem Rezirkulationskanal (9) für Rezirkulationsgas zu einem Luftansaugsammler (4), der den Verbrennungsmotor (1) ausstattet, versehen ist, wobei der Verbrennungsmotor (1) mit einem Abgasstrang (5) ausgestattet ist, um Abgas, das von den Zylindern (3, 3') erzeugt wird, abzuleiten, wobei der Verbrennungsmotor (1) mit einem Umleitungskanal (11) versehen ist, der den Rezirkulationszylinder (3') mit der Auspuffleitung (5) verbindet, **dadurch gekennzeichnet, dass** der Umleitungskanal (11) im Inneren eines Zylinderkopfs (12), den der Verbrennungsmotor (1) umfasst, eingerichtet ist.

2. Verbrennungsmotor (1) nach Anspruch 1, **dadurch gekennzeichnet, dass** der Umleitungskanal (11) mit einem Umleitungsventil (13) ausgestattet ist, das zwischen einer Öffnungsposition, in der das Umleitungsventil (13) ein Durchgehen von Rezirkulationsgas in das Innere des Umleitungskanals (11) gestattet, und einer Schließposition, in der das Umleitungsventil (13) ein solches Durchgehen verbietet, beweglich ist.

3. Verbrennungsmotor (1) nach Anspruch 2, **dadurch gekennzeichnet, dass** das Umleitungsventil (13) mit einem Umleitungsnocken (16) in Beziehung steht, der auf eine Auspuffnockenwelle (14) montiert ist, die mit Nocken (15, 15') zum Betätigen von Auspuffventilen (8, 8'), die dem Rezirkulationszylinder (3') zugeordnet sind, ausgestattet ist.

4. Verbrennungsmotor (1) nach Anspruch 3, **dadurch gekennzeichnet, dass** der Umleitungsnocken (16) mit einem Verriegelungsorgan (19) des Umleitungsnockens (16) versehen ist, wobei das Verriegelungsorgan (19) zwischen einer Verriegelungsposition, in der das Verriegelungsorgan (19) den Umleitungsnocken (16) in Bezug zu der Auspuffnockenwelle (14) stationär hält, und einer Entriegelungsposition, in der das Verriegelungsorgan (19) den Umleitungsnocken (16) freigibt, beweglich ist.

5. Verbrennungsmotor (1) nach Anspruch 4, **dadurch gekennzeichnet, dass** eine Position des Verriegelungsorgans (19) von einem Schmieröldruck des Verbrennungsmotors (1) abhängt.

6. Verbrennungsmotor (1) nach einem der vorhergehenden Ansprüche, **dadurch gekennzeichnet, dass** der Rezirkulationskanal (9) mit einem Rezirkulationsventil (10) versehen ist, das zwischen einer geschlossenen Position, in der das Rezirkulationsventil (10) ein Durchgehen von Rezirkulationsgas in das Innere des Rezirkulationskanals (9) verbietet, und einer offenen Position, in der das Rezirkulationsventil (10) ein solches Durchgehen gestattet, eingerichtet ist.

7. Verfahren zum Umsetzen eines Verbrennungsmotors (1) nach den Ansprüchen 3 und 6, **dadurch gekennzeichnet, dass** bei einer Stoppphase des Verbrennungsmotors (1) und bei einer Startphase des Verbrennungsmotors (1) mit einer Temperatur niedriger als eine Schwellentemperatur das Verriegelungsorgan (19) unterschiedslos in Verriegelungsposition und das Rezirkulationsventil (10) in geschlossener Position ist.

8. Verfahren nach dem Anspruch 7, **dadurch gekennzeichnet, dass** das Verriegelungsorgan (19) nach einer Startphase des Verbrennungsmotors (1) in Verriegelungsposition und das Rezirkulationsventil (10) in offener Position ist.

9. Kraftfahrzeug, das mit einem Verbrennungsmotor (1) nach einem der Ansprüche 1 bis 6 ausgestattet ist.

## Claims

1. An internal combustion engine (1) comprising a plurality of cylinders (3, 3'), including at least one recirculation cylinder (3'), the recirculation cylinder (3') being provided with a recirculation duct (9) of recirculation gas towards an air intake manifold (4) equipping the internal combustion engine (1), the internal combustion engine (1) being equipped with an exhaust line (5) to evacuate exhaust gases produced by the cylinders (3, 3'), the internal combustion engine (1) being provided with a bypass duct (11) which connects the recirculation cylinder (3') to the exhaust line (5), **characterized in that** the bypass duct (11) is arranged in the interior of a cylinder head (12) which the internal combustion engine (1) includes.

2. The internal combustion engine (1) according to Claim 1, **characterized in that** the bypass duct (11) is equipped with a bypass valve (13) which is movable between an opening position in which the bypass valve (13) permits a passage of recirculation gas in the interior of the bypass duct (11), and a closure position in which the bypass valve (13) prohibits such a passage.

3. The internal combustion engine (1) according to Claim 2, **characterized in that** the bypass valve (13) is associated with a bypass cam (16) which is mounted on an exhaust camshaft (14) equipped with operating cams (15, 15') of exhaust valves (8, 8') assigned to the recirculation cylinder (3').

4. The internal combustion engine (1) according to Claim 3, **characterized in that** the bypass cam (16) is provided with a locking member (19) of the bypass cam (16), the locking member (19) being movable between a locking position, in which the locking member (19) holds the bypass cam (16) fixed with respect to the exhaust camshaft (14), and an unlocking position, in which the locking member (19) frees the bypass cam (16).

5. The internal combustion engine (1) according to Claim 4, **characterized in that** a position of the locking member (19) is placed under the dependence of a lubricating oil pressure of the internal combustion engine (1).

6. The internal combustion engine (1) according to any one of the preceding claims, **characterized in that** the recirculation duct (9) is provided with a recirculation valve (10) which is arranged between a closed position, in which the recirculation valve (10) prohibits a passage of recirculation gas in the interior of the recirculation duct (9), and an open position, in which the recirculation valve (10) permits such a passage.

7. A method for implementing an internal combustion engine (1) according to Claims 3 and 6, **characterized in that** equally during a stop phase of the internal combustion engine (1) and during a start phase of the internal combustion engine (1) at a temperature lower than a threshold temperature, the locking member (19) is in locking position and the recirculation valve (10) is in closed position.

8. The method according to Claim 7, **characterized in that** after a start phase of the internal combustion engine (1), the locking member (19) is in unlocking position and the recirculation valve (10) is in open position.

9. A motor vehicle equipped with an internal combustion engine (1) according to any one of Claims 1 to 6.
